# EUROPEAN PATENT SPECIFICATION

(11) **EP 2 707 175 B1**
(45) Date of publication and mention of the grant of the patent: **10.02.2016**
(21) Application number: 12729211.8
(22) Date of filing: 14.05.2012
(51) Int. Cl.: B23Q 1/48, B23Q 1/54, B23Q 5/56

(54) **TOOL CARRYING HEAD FOR MACHINE TOOLS**
WERKZEUGTRÄGERKOPF FÜR WERKZEUGMASCHINEN
TÊTE PORTE-OUTIL POUR MACHINES-OUTILS

(30) Priority: 12.05.2011 IT TO20110420
(43) Date of publication of application: 19.03.2014
(73) Proprietor: FIDIA S.p.A., 10099 San Mauro Torinese (Torino) (IT)
(72) Inventor: REPOSSINI, Claudio Ugo Protaso, 20153 Milano (IT); MORFINO, Giuseppe, I-10025 PINO TORINESE (Torino) (IT)
(74) Representative: Quinterno, Giuseppe
(86) International application number: PCT/IB2012/052390
(87) International publication number: WO 2012/153316

(56) References cited:
- DE-A1- 19 850 603
- FR-A1- 2 861 326
- US-B1- 7 909 550

## Description

The present invention relates to a tool carrying head for machine tools, and in particular to a tool carrying head according to the preamble of Claim 1.

An example of a tool carrying head of this type is described in DE 198 50 603 A1.

One object of the present invention is to provide a tool carrying head having a morphology such that it has a very high structural rigidity together with optimal dynamic stability, and is particularly suitable for chip removal machining operations carried out on components or parts made of tough ferrous and non-ferrous materials, in particular titanium and its alloys, which require high cutting forces.

A further object of the invention is to provide a tool carrying head which has a very high tool positioning accuracy, for machining parts and components with very high dimensional accuracy in terms of both shape and surface finish.

These and other objects are achieved according to the invention with a tool carrying head whose principal characteristics are defined in the attached Claim 1.

In one embodiment, the second carrying structure is conveniently shaped essentially in the form of a rectangular sleeve.

In other embodiments, the second structure may be made in the shape of a fork or a body which is, for example, parallelepipedal.

Conveniently, the second carrying structure is supported on opposite sides by the branches or prongs of the fork-shaped carrying structure, using corresponding rotary support means.

Similarly, if the second carrying structure is sleeve-shaped, the third carrying structure is also supported on opposite sides by the second carrying structure, using corresponding rotary support means.

Preferably the aforesaid first, second and third axes intersect each other at a single point. However, it is possible to have embodiments in which these axes do not intersect, particularly embodiments in which the third axis does not intersect the other two.

Conveniently, the fork-shaped carrying structure can be mounted on a support structure in such a way that it can be translated in a predetermined direction, which is preferably parallel to the aforesaid first axis. This predetermined direction can be, for example, horizontal or vertical.

Alternatively, the fork-shaped carrying structure can be fixed, for example, to a stationary structure, and the workpiece can be carried by a structure which is movable along three axes.

Further characteristics and advantages of the invention will become clear from the following detailed description which is given purely by way of non-limiting example with reference to the attached drawings, in which:
Figure 1 is a side view in partial section of a tool carrying head according to the present invention;
Figure 2 is a view similar to that of Figure 1, and shows the sleeve structure of the tool carrying head in a different angular position;
Figure 3 is a front view taken in the direction of the arrow III of Figure 1;
Figure 4 is a plan view from above taken in the direction of the arrow IV in Figure 1;
Figures 5 and 6 are plan views from above of two variant embodiments;
Figure 7 is a side view in partial section of an embodiment of a tool carrying head according to the invention, and
Figure 8 is a sectional view taken essentially along the line VIII-VIII of Figure 7.

In the drawings, the number 1 indicates the whole of a tool carrying head according to the present invention.

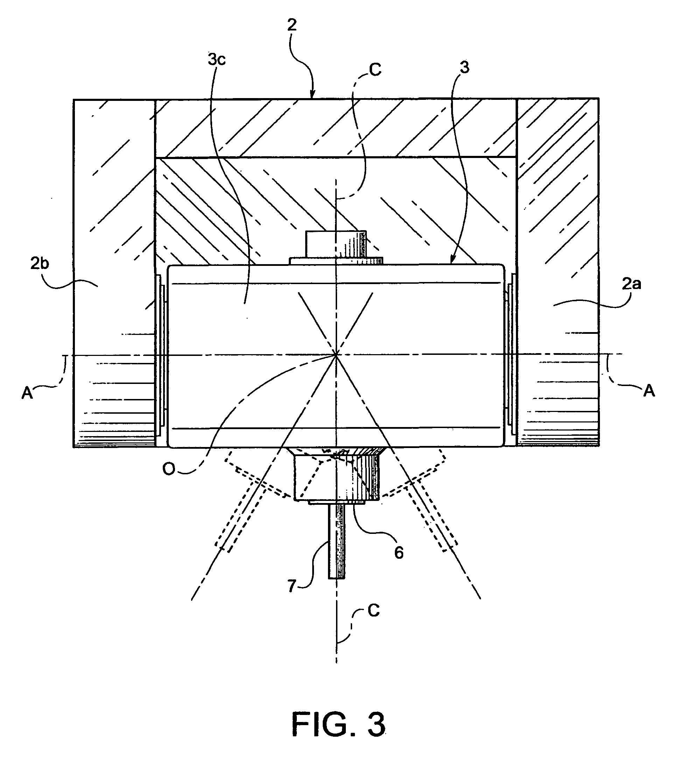

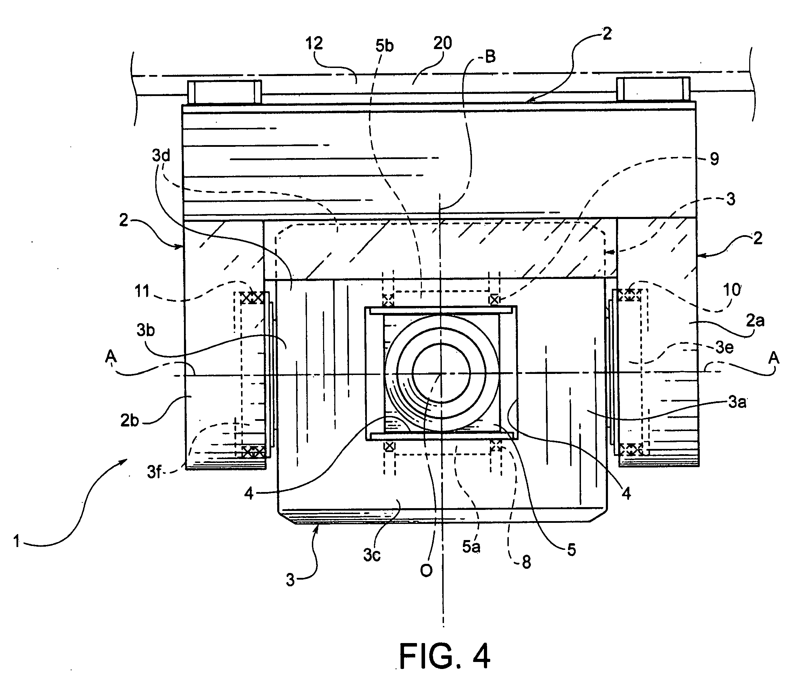

In the embodiment illustrated by way of example, the head 1 comprises a first carrying structure 2, essentially in the form of a fork, having two branches or prongs 2a, 2b facing each other (see, in particular, Figures 3 and 4).

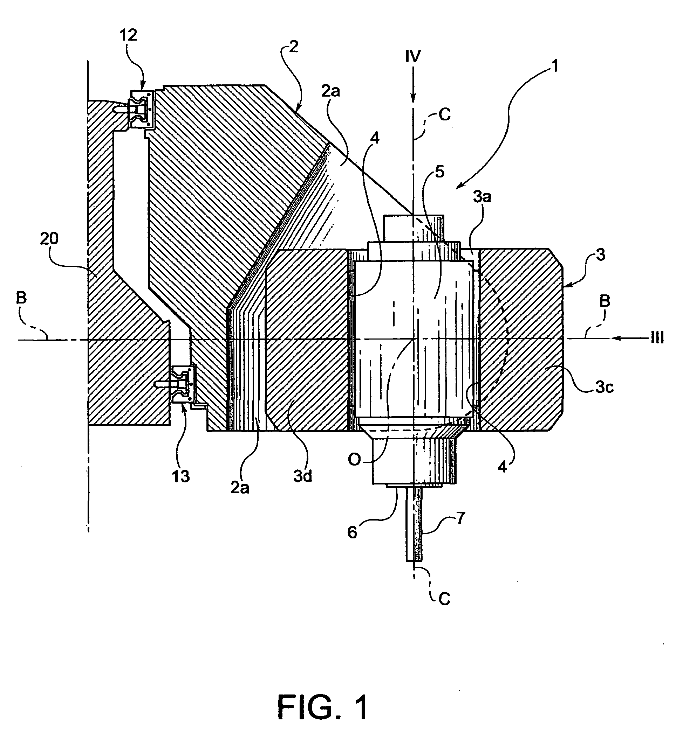

The head 1 further comprises a second carrying structure 3, which, in the embodiments shown in Figures 1 to 4 and 7-8, is essentially shaped in the form of a sleeve, preferably a sleeve of substantially rectangular shape. With particular reference to Figure 4, in the illustrated embodiment the sleeve-shaped carrying structure 3 has two portions or sides 3a, 3b which extend in planes parallel to the branches or prongs 2a, 2b of the fork-shaped structure 2, and also two portions or sides 3c, 3d which are orthogonal to these branches or prongs.

The sleeve-shaped carrying structure 3 defines an internal through opening indicated by 4 in the drawings.

With particular reference to Figures 3 and 4, the sleeve-shaped carrying structure 3 is mounted rotatably between the branches 2a, 2b of the fork-shaped structure 2 about a first axis A-A, which intersects these branches or prongs 2a, 2b.

In Figures 1, 2 and 4, the number 5 indicates a further carrying structure, which is mounted in the through opening 4 of the sleeve-shaped structure 3, in such a way that it is rotatable about a second axis B-B which is orthogonal to the axis A-A.

Preferably, but not necessarily, the axes A-A and B-B intersect each other at a point indicated by O.

In the carrying structure 5 there is mounted a tool carrying spindle 6 (Figures 1 to 3) of a known type, in which a tool 7, such as a milling tool, can be mounted.

The spindle 6 is mounted in the structure 5 in such a way that it is rotatable about a third axis C-C, which is orthogonal to both the axes A-A and B-B.

Preferably, but not necessarily, the axis C-C and the axis B-B intersect each other at one point, which preferably coincides with the point O defined above.

With reference to Figure 4, the spindle carrying structure 5 has two opposite ends 5a and 5b which engage in the portions or sides 3c and 3d of the sleeve-shaped carrying structure 3, in which they are mounted rotatably about the axis B-B by means of respective bearing supports 8 and 9.

In its turn, the sleeve-shaped carrying structure 3 has two opposite ends 3e and 3f, which extend into the prongs 2a and 2b of the fork-shaped structure 2, where they are supported rotatably about the axis A-A by means of respective bearing support seats 10 and 11.

With reference to Figures 1, 2 and 4, in the embodiment illustrated by way of example therein the fork-shaped carrying structure 2 is, in turn, mounted on a support structure 15, in such a way that it can be translated along a pair of parallel rectilinear guides 12 ad 13, which extend in a predetermined direction, preferably parallel to the axis A-A. In the embodiment shown in the drawings, this direction is horizontal, but in other embodiments it could be vertical.

The rotation of the spindle 6 relative to the carrying structure 5 can be produced in any of various known ways, for example by means of an electric motor, or by the use of what is known as a "bearing and spindle cartridge" with an epicyclic gearbox and a motor which are coaxial with each other and with the axis of the cartridge, or by the use of kinematic chains having gears which are not coaxial with the axis of the spindle.

The rotary movement of the structure 5 relative to the sleeve-like carrying structure 3, and the movement of the latter relative to the fork-shaped carrying structure 2, can be provided continuously or in "indexed" mode. For this purpose it is possible to use kinematic rotation chains comprising preloaded double pinions with mechanical or electrical devices, direct drive torque motors, endless screws with play recovery, ball screw mechanisms, or other systems.

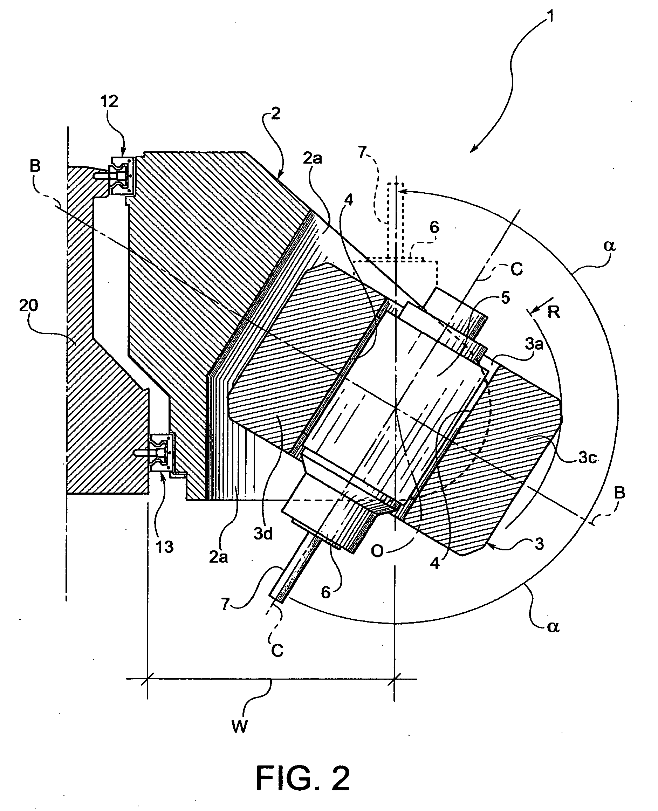

With reference to Figure 2, for guidance only, the head 1 allows the oscillation of the tool 7 over an angular operating range α of about 210°. The radius of rotation R of the sleeve-shaped structure 3 about the axis A-A (Figure 2) is extremely limited, as is the distance W between the axis A-A and the sliding guides of the fork-shaped carrying structure 2.

Because of the architecture described above, the tool carrying head according to the invention has very high structural rigidity and optimal dynamic stability. It is therefore particularly suitable for carrying out machining operations with chip removal on components or parts made of fairly tough materials which require considerable cutting forces.

Because the structure 5 and the sleeve-shaped structure 3 are doubly supported in rotation, the rotation of the tool carrying spindle 6 is extremely precise.

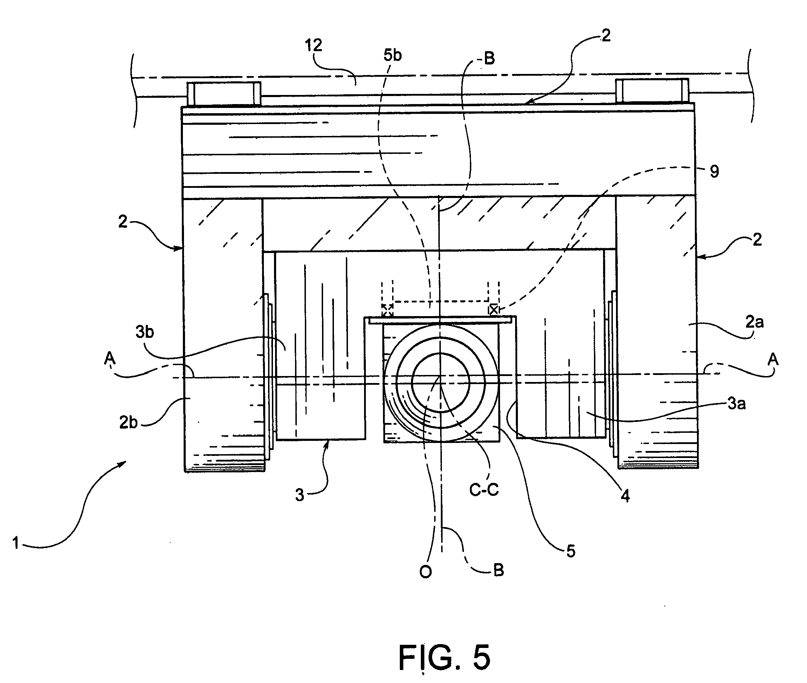

Figure 5 shows by way of example a variant embodiment. In this drawing, parts and elements described previously have been given the same alphabetical and numerical reference symbols as those used previously.

In the variant shown in Figure 5, the second carrying structure is not sleeve-shaped, but is made in the shape of a further fork 3, which defines in its inner part a through recess 4 in which the third carrying structure 5, which carries the tool, is connected to it. In this variant, the carrying structure 5 is supported rotatably about the axis B-B on one side only, on the intermediate branch of the fork 3. However, the fork is supported rotatably about the axis A-A on two opposite sides, as is the sleeve-shaped structure 3 of the embodiment shown in Figures 1 - 4.

In Figure 5, by way of example, the third axis C-C is shown as not intersecting the axes A-A and B-B, which can intersect each other at a point indicated here by O.

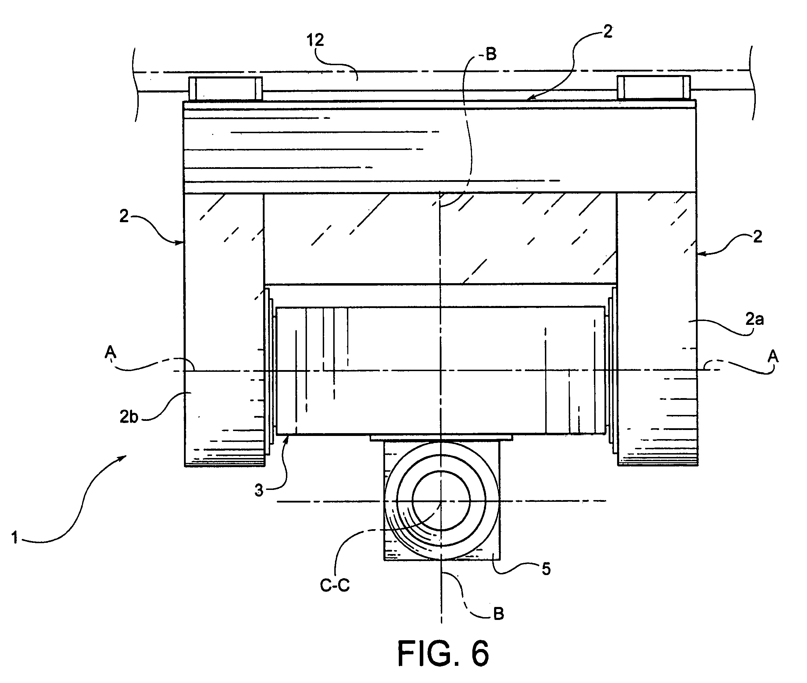

Figure 6 shows by way of example a further variant embodiment in which the second carrying structure 3 is represented by a body, of parallelepipedal shape for example, to which the third carrying structure 5 is connected in such a way that it projects from this body and is rotatable about the axis B-B. In this case also, the third carrying structure 5 is supported on one side only, while the body 3 is supported rotatably about the axis A-A at both of its opposite ends.

In Figure 6, by way of example, the axis of rotation C-C of the tool can intersect the axis B-B, which in turn can intersect the axis A-A, although at an intersection point which is different from that of the intersection between the axes B-B and C-C.

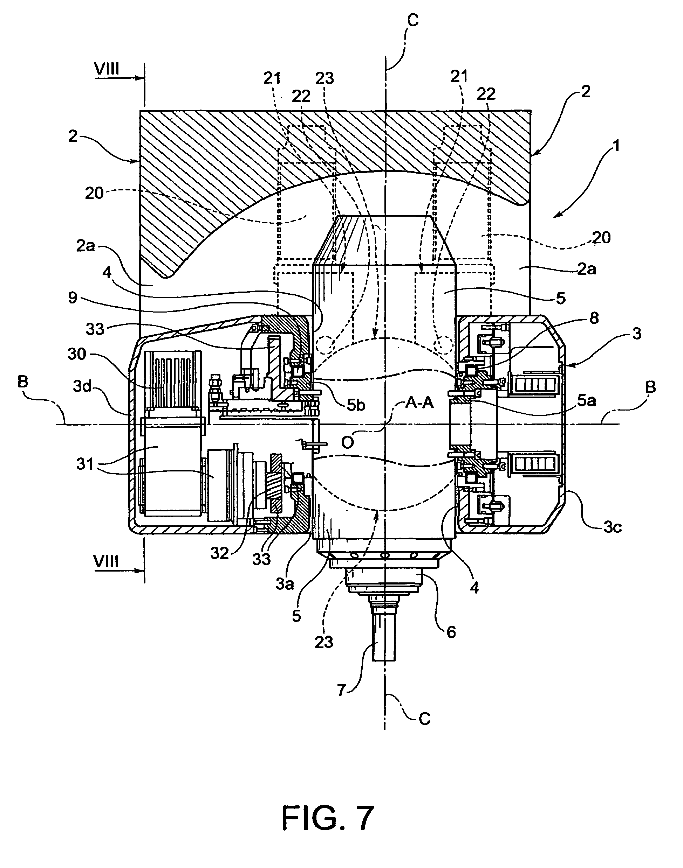

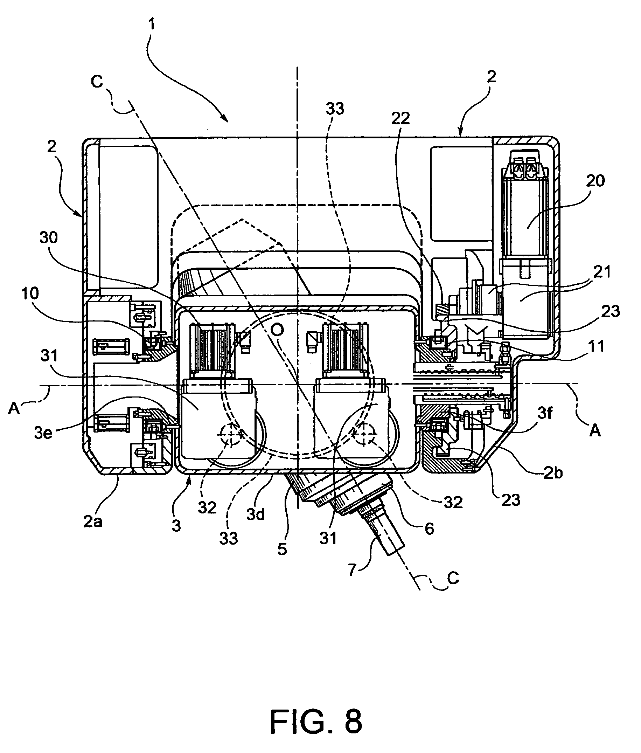

Figures 7 and 8 show an exemplary, non-limiting embodiment of a tool carrying head according to the invention, which is essentially of the type described above with reference to Figures 1 to 4.

In Figures 7 and 8, parts and elements identical or essentially equivalent to parts and elements described previously have been given the same alphabetic and numerical references as those used before.

In the embodiment shown in Figures 7 and 8, the movement of the intermediate structure 3 relative to the fork-shaped carrying structure 2 is provided by using what is known as a "dual drive" arrangement, comprising two electric motors 20 which, by means of associated transmission assemblies 21 (each including a reduction gear and a bevel gear unit), drive respective output pinions 22. Both of these pinions 22 engage with a single gear wheel 23 which is fixed to the intermediate structure 3 and is coaxial with the axis A-A.

The play between the pinions 22 and the gear wheel 23 can be eliminated by the coordinated control of the motors 20, and this is particularly convenient when the machining operations to be carried out require a high quality of finish of the machined surfaces.

The kinematic arrangement described above is fairly rigid and damping, and is therefore particularly suitable to the machining of "difficult" components such as components made of titanium, nickel steels and the like.

As shown in Figure 8 in particular, the electric motors 20 and the associated transmission assemblies 21 can advantageously be located inside a branch (2b) of the fork-shaped carrying structure 2, in particular with the motor orientated with its axis essentially parallel to this branch of the carrying structure 2, and orthogonal to the axis A-A.

In the solution illustrated in Figures 7 and 8, a rotary drive of the intermediate structure 3 is provided at one end of the structure only (the right-hand end as it appears in Figure 8), but it is possible to provide a drive at both ends of the intermediate structure 3, which would require further motors and corresponding transmission assemblies which could conveniently be housed in the other branch (2a) of the fork-shaped structure 2.

For moving the spindle carrying structure 5 relative to the intermediate structure 3, it is convenient to use a similar "dual drive" arrangement which comprises two electric motors 30, which drive corresponding output pinions 32 through associated transmission assemblies 31 (including corresponding reduction gears and bevel gear units). Both of these pinions 32 engage with a single gear wheel 33 which is fixed to the spindle carrying structure 5 and is coaxial with the axis B-B. The motors 30 are conveniently mounted with their axes orthogonal to the axes A-A and B-B.

In this case also, the play between the pinions 32 and the gear wheel 33 can be eliminated (or taken up) by the coordinated control of the motors 30.

In the illustrated embodiment, the motors 30 and the associated transmission assemblies 31 are housed in the branch 3d of the intermediate structure 3, in other words in the branch of this structure which, according to the arrangement of Figure 1, is close to the structure 15 to which the tool carrying head 1 is connected. However, these motors and the associated transmission assemblies could be housed in the opposite branch 3c of the intermediate structure 3.

In a further embodiment, the rotary drive of the spindle carrying structure 5 relative to the intermediate structure 3 could be provided on both of the opposite sides of the structure 5, by using further motors and corresponding transmission assemblies in the portion 3c of the intermediate structure 3 (Figure 8), provided of course that the internal volume of the portion 3c is suitably designed.

In a variant embodiment, the motors 30 and the associated transmission devices 31 can be housed in the branches 3a and 3b of the intermediate structure 3, with the longitudinal axes of the motors 30 preferably parallel to the axis B-B and the gear wheel 33 housed in the branch 3c or in the branch 3d of the intermediate structure 3. In an arrangement of this type, corresponding idler gear wheels can be interposed between the pinions 32 and the gear wheel 33.

The rotary drive arrangement for the spindle carrying structure 5 shown in Figures 7 and 8 is also suitable for use in tool carrying heads according to Figures 5 and 6.

In any case, the location of the drive devices inside the structures 2 and 3 themselves makes it possible to maximize the ranges of oscillation about the axes A-A and B-B, and therefore to carry out machining with the tool axis positioned both horizontally and vertically.

The tool carrying head according to the invention has compact dimensions and is relatively lightweight, and its movement along the linear axes of a machine tool is facilitated.

Clearly, provided that the principle of the invention is retained, the forms of application and the details of construction can be varied widely from what has been described and illustrated purely by way of non-limiting example, without thereby departing from the scope of protection of the invention as defined by the attached claims.

## Claims

1. Tool carrying head (1) for a machine tool, comprising
a first fork-shaped carrying structure (2), having two branches or prongs (2a, 2b) facing each other;
a second carrying structure (3), mounted rotatably between the branches (2a, 2b) of the fork-shaped structure (2) about a first axis (A-A) which is essentially orthogonal to the branches or prongs (2a, 2b);
a third carrying structure (5) mounted rotatably with respect to the second structure (3), about a second axis (B-B) which is orthogonal to the first axis (A-A);
a tool carrying spindle (6) mounted rotatably in the third carrying structure (5) about a third axis (C-C) which is orthogonal to the second axis (B-B); and
first and second motor means (20-23; 30-33) adapted to cause, respectively, the rotation of the second carrying structure (3) with respect to the first (2), and the rotation of the third carrying structure (5) with respect to to the second (3), about the first and second axes (A-A; B-B) respectively;
**characterized in that** the first and second motor means (20; 30) and respective associated transmission assemblies (21-23; 31-33) are housed inside respective branches of the first and second carrying structures (2; 3) respectively, and each motor means comprises a respective pair of electric motors (20; 30) coupled to a single driven gear wheel (23; 33) fixed to the corresponding driven carrying structure (2, 3).

2. Tool carrying head according to Claim 1, in which each motor (20; 30) is coupled to the corresponding drive gear wheel (23; 33) through a corresponding transmission assembly (21; 31).

3. Tool carrying head according to Claim 1 or 2, in which each motor (20; 30) is positioned with its axis substantially orthogonal to the axis (A-A; B-B) about which the corresponding driven carrying structure (2; 3) is rotatable.

4. Tool carrying head according to Claims 2 and 3, in which the transmission assembly (21; 31) associated with each motor (20; 30) comprises a bevel gear unit and may comprise a reduction gear if required.

5. Tool carrying head according to any one of the preceding claims, in which the second carrying structure (3) is essentially shaped in the form of a rectangular sleeve, having two portions or sides (3a, 3b) parallel to the branches or prongs (2a, 2b) of the fork-shaped carrying structure (2) and two portions or sides (3c, 3d) which are orthogonal.

6. Tool carrying head according to any one of the preceding claims, in which the second carrying structure (3) is supported on opposite sides by the branches or prongs (2a, 2b) of the fork-shaped carrying structure (2), using corresponding rotary support means (10, 11).

7. Tool carrying head according to Claim 5, in which the second carrying structure (3) is substantially fork-shaped.

8. Tool carrying head according to any one of Claims 1 to 6, in which the third carrying structure (5) is supported on opposite sides by the second sleeve-shaped carrying structure (3), using corresponding rotary support means (8, 9).

9. Tool carrying head according to any one of the preceding claims, in which the first and second axes (A-A, B-B) intersect each other.

10. Tool carrying head according to any one of the preceding claims, in which the second and third axes (B-B, C-C) intersect each other.

11. Tool carrying head according to any one of the preceding claims, in which the first and third axes (A-A, C-C) intersect each other.

12. Tool carrying head according to any one of the preceding claims, in which the fork-shaped carrying structure (2) is mounted in a support structure (15) in such a way that it can be translated in a predetermined direction (12, 13) which is preferably parallel to the first axis (A-A).

13. Tool carrying head according to Claim 12, in which the predetermined direction is horizontal or vertical.

## Patentansprüche

1. Werkzeugträgerkopf (1) für ein Maschinenwerkzeug, umfassend:
eine erste gabelförmige Tragestruktur (2), welche zwei zu einander weisende Zweige oder Zinken (2a, 2b) aufweist;
eine zweite Tragestruktur (3), welche zwischen den Zweigen (2a, 2b) der gabelförmigen Struktur (2) um eine erste Achse (A-A) rotierbar angebracht ist, welche im Wesentlichen orthogonal zu den Zweigen oder Zinken (2a, 2b) ist;
eine dritte Tragestruktur (5), welche bezüglich der zweiten Struktur (3) um eine zweite Achse (B-B) rotierbar angebracht ist, welche orthogonal zu der ersten Achse (A-A) ist;
eine Werkzeugträgerspindel (6), welche in der dritten Tragestruktur (5) um eine dritte Achse (C-C) rotierbar angebracht ist, die orthogonal zu der zweiten Achse (B-B) ist; und
erste und zweite Motormittel (20-23; 30-33), welche dazu eingerichtet sind, jeweils die Rotation der zweiten Tragestruktur (3) bezüglich der ersten (2) und die Rotation der dritten Tragestruktur (5) bezüglich der zweiten (3) hervorzurufen, jeweils um die erste bzw. zweite Achse (A-A; B-B);
**dadurch gekennzeichnet, dass** die ersten und zweiten Motormittel (20; 30) und jeweilige zugeordnete Getriebeanordnungen (21-23; 31-33) innerhalb jeweiliger Zweige der ersten bzw. zweiten Tragestruktur (2; 3) aufgenommen sind und jedes Motormittel ein jeweiliges Paar von Elektromotoren (20; 30) umfasst, welche mit einem einzelnen angetriebenen Getrieberad (23; 33) gekoppelt sind, welche an der entsprechenden angetriebenen Tragestruktur (2, 3) befestigt sind.

2. Werkzeugträgerkopf nach Anspruch 1, in welchem jeder Motor (20; 30) mit dem entsprechenden Antriebs-Getrieberad (23; 33) durch eine entsprechende Getriebeanordnung (21; 31) gekoppelt ist.

3. Werkzeugträgerkopf nach Anspruch 1 oder 2, in welchem jeder Motor (20; 30) mit seiner Achse im Wesentlichen orthogonal zu der Achse (A-A; B-B) positioniert ist, um welche die entsprechende angetriebene Tragestruktur (2; 3) rotierbar ist.

4. Werkzeugträgerkopf nach Anspruch 2 oder 3, in welchem die jedem Motor (20; 30) zugeordnete Getriebeanordnung (21; 31) eine angeschrägte Getriebe-Einheit umfasst und, falls benötigt, ein Untersetzungsgetriebe umfassen kann.

5. Werkzeugträgerkopf nach einem der vorhergehenden Ansprüche, in welchem die zweite Tragestruktur (3) im Wesentlichen in der Form einer rechteckigen Hülse geformt ist, welche zwei zu den Zweigen oder Zinken (2a, 2b) der gabelförmigen Tragestruktur (2) parallele Abschnitte oder Seiten (3a, 3b) und zwei Abschnitte oder Seiten (3c, 3d) aufweist, welche orthogonal sind.

6. Werkzeugträgerkopf nach einem der vorhergehenden Ansprüche, in welchem die zweite Tragestruktur (3) an gegenüberliegenden Seiten von den Zweigen oder Zinken (2a, 2b) der gabelförmigen Tragestruktur (2) gehalten ist, unter Verwendung entsprechender rotierender Tragemittel (10, 11).

7. Werkzeugträgerkopf nach Anspruch 5, in welchem die zweite Tragestruktur (3) im Wesentlichen gabelförmig ist.

8. Werkzeugträgerkopf nach einem der Ansprüche 1 bis 6, in welchem die dritte Tragestruktur (5) an gegenüberliegenden Seiten von der zweiten hülsenförmigen Tragestruktur (3) gehalten ist, unter Verwendung entsprechender rotierender Tragemittel (8, 9).

9. Werkzeugträgerkopf nach einem der vorhergehenden Ansprüche, in welchem die erste und zweite Achse (A-A, B-B) einander kreuzen.

10. Werkzeugträgerkopf nach einem der vorhergehenden Ansprüche, in welchem die zweite und dritte Achse (B-B, C-C) einander kreuzen.

11. Werkzeugträgerkopf nach einem der vorhergehenden Ansprüche, in welchem die erste und dritte Achse (A-A, C-C) einander kreuzen.

12. Werkzeugträgerkopf nach einem der vorhergehenden Ansprüche, in welchem die gabelförmige Tragestruktur (2) in einer Haltestruktur (15) derart gehalten ist, dass sie in eine vorbestimmte Richtung (12, 13) verlagert werden kann, welche vorzugsweise parallel zu der ersten Achse (A-A) ist.

13. Werkzeugträgerkopf nach Anspruch 12, in welchem die vorbestimmte Richtung horizontal oder vertikal ist.

## Revendications

1. Tête porte-outil (1) pour une machine-outil, comprenant
une première structure portante en forme de fourche (2), possédant deux branches ou dents (2a, 2b) l'une en face de l'autre ;
une deuxième structure portante (3), montée avec possibilité de rotation entre les branches (2a, 2b) de la structure en forme de fourche (2) autour d'un premier axe (A-A) qui est sensiblement perpendiculaire aux branches ou dents (2a, 2b) ;
une troisième structure portante (5) montée avec possibilité de rotation par rapport à la deuxième structure (3), autour d'un deuxième axe (B-B) perpendiculaire au premier axe (A-A) ;
une broche porte-outil (6) montée avec possibilité de rotation dans la troisième structure portante (5) autour d'un troisième axe (C-C) perpendiculaire au deuxième axe (B-B) ; et
des premier et deuxième moyens moteurs (20-23 ; 30-33) adaptés pour causer, respectivement, la rotation de la deuxième structure portante (3) par rapport à la première (2) et la rotation de la troisième structure portante (5) par rapport à la deuxième (3) autour des premier et deuxième axes (A-A ; B-B) respectivement ;
**caractérisée en ce que** les premier et deuxième moyens moteurs (20 ; 30) et les assemblages de transmission associés (21-23 ; 31-33) sont logés à l'intérieur de branches respectives des première et deuxième structures portantes (2 ; 3) respectivement, et chaque moyen moteur comprend une paire correspondante de moteurs électriques (20 ; 30) couplés à une seule roue d'engrenage entraînée (23 ; 33) fixée à la structure portante entraînée (2, 3) correspondante.

2. Tête porte-outil selon la revendication 1, dans laquelle chaque moteur (20 ; 30) est couplé à la roue d'engrenage d'entraînement (23 ; 33) correspondante par un assemblage de transmission (21 ; 31) correspondant.

3. Tête porte-outil selon la revendication 1 ou 2, dans laquelle chaque moteur (20 ; 30) est positionné avec son axe sensiblement perpendiculaire à l'axe (A-A ; B-B) autour duquel la structure portante entraînée (2 ; 3) correspondante peut tourner.

4. Tête porte-outil selon les revendications 2 et 3, dans laquelle l'assemblage de transmission (21 ; 31) associé à chaque moteur (20 ; 30) comprend une unité d'engrenage conique et peut comprendre un engrenage réducteur si nécessaire.

5. Tête porte-outil selon l'une quelconque des revendications précédentes, dans laquelle la deuxième structure portante (3) a sensiblement la forme d'un manchon rectangulaire ayant deux parties ou côtés (3a, 3b) parallèles aux branches ou dents (2a, 2b) de la structure portante en forme de fourche (2) et deux parties ou côtés (3c, 3d) perpendiculaires.

6. Tête porte-outil selon l'une quelconque des revendications précédentes, dans laquelle la deuxième structure portante (3) est supportée sur des côtés opposés par les branches ou dents (2a, 2b) de la structure portante en forme de fourche (2), à l'aide de moyens de support rotatifs (10, 11) correspondants.

7. Tête porte-outil selon la revendication 5, dans laquelle la deuxième structure portante (3) est sensiblement en forme de fourche.

8. Tête porte-outil selon l'une quelconque des revendications 1 à 6, dans laquelle la troisième structure portante (5) est supportée sur des côtés opposés par la deuxième structure portante en forme de manchon (3), à l'aide de moyens de support rotatifs (8, 9) correspondants.

9. Tête porte-outil selon l'une quelconque des revendications précédentes, dans laquelle les premier et deuxième axes (A-A, B-B) sont en intersection l'un avec l'autre.

10. Tête porte-outil selon l'une quelconque des revendications précédentes, dans laquelle les deuxième et troisième axes (B-B, C-C) sont en intersection l'un avec l'autre.

11. Tête porte-outil selon l'une quelconque des revendications précédentes, dans laquelle les premier et troisième axes (A-A, C-C) sont en intersection l'un avec l'autre.

12. Tête porte-outil selon l'une quelconque des revendications précédentes, dans laquelle la structure de support en forme de fourche (2) est montée dans une structure de support (15) de telle manière qu'elle puisse être déplacée en translation dans une direction prédéterminée (12, 13) qui est de préférence parallèle au premier axe (A-A).

13. Tête porte-outil selon la revendication 12, dans laquelle la direction prédéterminée est horizontale ou verticale.
